# EUROPÄISCHE PATENTANMELDUNG

(11) **EP 1 282 213 A2**
(43) Veröffentlichungstag der Anmeldung: **05.02.2003**
(21) Anmeldenummer: 02015443.1
(22) Anmeldetag: 11.07.2002
(51) Int. Cl.: H02J 7/34

(54) **Elektrische Verbrauchseinheit**

(30) Priorität: 02.08.2001 DE 20112871 U
(71) Anmelder: Gutmann, Max, 81377 München (DE)
(72) Erfinder: Gutmann, Max, 81377 München (DE)
(74) Vertreter: Alber, Norbert, Dipl.-Ing.

(57) **Zusammenfassung**

Mobile elektrische Verbrauchseinheit, wie beispielsweise eine Taschenlampe, ein Handy, eine Armbanduhr oder auch ein Herzschrittmacher, die in sehr kurzer Zeit wieder aufgeladen werden kann, die während des Einsatzes von einer Stromerzeugungeinheit getrennt ist und außer dem eigentlichen elektrischen Verbraucher eine mobile Spannungsquelle als Energieversorgung aufweist, wobei die Spannungsquelle ein Kondensator ist.

## Beschreibung

Die Erfindung betrifft eine mobile elektrische Verbrauchseinheit wie beispielsweise eine Taschenlampe, ein Handy, eine Armbanduhr oder auch einen Herzschrittmacher.

Derartige elektrische Verbrauchseinheiten werden mit Batterien oder wiederaufladbaren Batterien, also Akkus, als Spannungsquelle betrieben. Ist die Spannungsquelle erschöpft, müssen Batterien ausgetauscht bzw. die leeren Akkus gegen geladene Akkus ausgetauscht oder die leeren Akkus nachgeladen werden.

Da bei vielen elektrischen Verbrauchseinheiten, typischerweise eben einer Taschenlampe oder einem Handy, der Akku inzwischen den größten Teil des Gewichts der gesamten Verbrauchseinheit ausmacht, hat der Verbraucher in der Regel keinen zweiten Ersatzakku bei sich, sondern - vor allem auf längeren Reisen - eher ein Ladegerät, um den erschöpften Akku unterwegs nachladen zu können.

Hierfür muß nätürlich zu einem eine entsprechende Stromversorgungseinheit, in der Regel also eine Steckdose eines festinstallierten Stromnetzes wie etwa das 220 V Netz, oder eine Steckdose eines mobilen Stromnetzes wie etwa des 12V oder 24V Stromnetzes eines Fahrzeuges, zur Verfügung stehen.

Weiterhin muß das Ladegerät über den passenden Steckkontakt für das zur Verfügung stehende Stromnetz verfügen und - da das Nachladen eines Akkus im normalen Modus mehrere Stunden und selbst im Schnelllademodus mindestens eine Stunde benötigt - die entsprechende Zeit zum Nachladen zur Verfügung stehen.

Dies wird von allen Benutzern als nachteilig empfunden, und gilt einerseits für Verbrauchseinheiten die mangels häufiger Benutzung auch häufig einen frisch geladenen Akku bzw. neue Batterien benötigen und andererseits für solche Verbrauchseinheiten, die typischerweise mit großem zeitlichen Abstand benötigt werden, beispielsweise eine lediglich als Notlicht benutzte Taschenlampe, da dann eine große Gefahr besteht, dass die dort ursprünglich eingesetzten Batterien oder Akkus aufgrund der langen inzwischen verstrichenen Zeit durch Selbstentladung nicht mehr ausreichend geladen sind.

Es ist daher die Aufgabe gemäß der vorliegenden Erfindung, eine mobile elektrische Verbrauchseinheit, insbesondere eine Taschenlampe, bzw. eine Spannungsquelle für derartige.mobile elektrische Verbrauchseinheiten zur Verfügung zu stellen, die in sehr kurzer Zeit wieder aufgeladen werden können.

Diese Aufgabe wird durch die Merkmale des Anspruches 1 gelöst. Vorteilhafte Ausführungsformen ergeben sich aus den Unteransprüchen. Dadurch, dass als Spannungsquelle statt einer Batterie oder eines Akkus ein Kondensator benutzt wird, ist die Ladezeit drastisch verringert, und liegt bei wenigen Sekunden bis maximal einer Minute.

Wenn zusätzlich die Verbrauchseinheit einen Lade-Adapter umfasst, der der elektrischen Verbindung des zu ladenden Kondensators durch eine Stromerzeugungseinheit, beispielsweise ein festes Stromnetz oder das Bord-Stromnetz eines Fahrzeuges oder eine Brennstoffzelle, dient und zu diesem Zweck einerseits die sowohl primärseitigen als auch sekundärseitigen, also stromnetzseitigen als auch kondensatorseitigen, Kontaktelemente aufweist als auch eine Ladekontrollschaltung, die unabhängig von Strom und Spannung auf der Primärseite den auf der Sekundärseite angeschlossenen Kondensator zuverlässig lädt, ist eine schnelle Aufladung überall möglich.

Ein solcher Ladeadapter kann primärseitig Anschlüsse nur für eine bestimmte Stromquelle oder Anschlüsse für mehrere verschiedene Stromquellen (12 V, 24 V, 110 V, 220 V, induktive Kopplung, Solarzellen etc.) aufweisen, je nach gewünschtem Anwendungszweck.

Zu diesem Zweck wird sinnvollerweise der Kondensator nicht mit einer feststehenden Spannung und einer feststehenden Stromstärke beaufschlagt, sondern es wird ein Ladeprogramm durchlaufen, welches auch als ersten Schritt einen Entladeschritt und/oder die Messung des Ladezustandes des Kondensators beinhaltet.

Dabei wirkt es sich vorteilhaft aus, dass ein Kondensator - im Gegensatz zu Akkumulatoren und Batterien - keinen sogenannten "Memory-Effekt" - besitzt, also beim Entladen eines Kondensators keine oder kaum eine Restspannung im Kondensator verbleibt und auf diese Art und Weise ein Kondensator eine sehr hohe Anzahl von Betriebszyklen (Ladung und anschließende Entladung) ohne nennenswerte Beeinträchtigungen durchlaufen kann.

Um die im Kondensator bei Entladung verbleibende Restspannung im Vergleich zur Maximalspannung gering zu halten, also die nutzbare Spannungsabnahme möglichst groß zu gestalten, ist es beispielsweise bei einer Leuchte als Verbrauchseinheit, die zur Verringerung des Stromverbrauchs Leuchtdioden mit einer Betriebsspannung von 3,6 V aufweisen, sinnvoll, eine solche Verbrauchseinheit mittels Kondensatorbaugruppen mit Spannung zu versorgen, in denen jeweils zwei Kondensatoren in Reihe geschaltet sind. Die. heute übliche Abgabespannung von Goldkondensatoren von 2,3 V wird dadurch auf 4,6 V verdoppelt. Diese Kondensatormodule werden dann wiederum mittels Parallelschaltung gekoppelt. Durch diese Anordnung ist es jedoch möglich, die Kapazität der beiden jeweils in Reihe geschalteten Kondensatoren in besserem Maße auszunutzen bis herab zu einer Restspannung von ca. 1 V, als es bei dem umgekehrten technischen Weg, nämlich der Parallelschaltung einzelner Kondensatoren mit jeweils 2,3 V Abgangsspannung, und dem elektronischen Hochtransformieren dieser Spannung auf die 3,6 V-Betriebsspannung der LEDs, möglich wäre.

Der Ladeadapter weist ferner die richtige Form von primärseitigen Kontaktelementen zum Verbinden mit einer Stromversorgungseinheit auf, also beispielsweise Kontaktelemente zum Einstecken in eine Schuko-Steckdose, Kontaktelemente zum Einstecken in die Buchse für einen mit 12V oder 24V betriebenen Zigarettenanzünders und/oder eine kontaktlose, induktive Kupplungseinheit, z. B. in Form einer Spule, im Ladeadapter.

Insbesondere die beiden Kontaktelemente zum Einstecken in Schuko-Steckdosen sollten hinsichtlich ihres gegenseitigen Abstandes und/oder ihres jeweiligen Durchmessers veränderbar sein, um in den verschiedenen Ländern eingesetzt werden zu können, die sich hinsichtlich der ortsfesten Netze und dabei verwendeter Steckdosen nicht nur durch die Spannung (220 V bzw. 110V) unterscheiden, sondern auch durch den Abstand der Kontakte in den Steckdosen.

Die Lade-Kontroll-Schaltung sollte dabei auch eine Vorrichtung zum selbsttätigen Erkennen der auf der Primärseite anliegenden Spannung umfassen.

Der Lade-Adapter kann auch ein weiteres primärseitiges Kontaktelement umfassen, welches de facto dem kontaktlosen Laden des Kondensators dient, indem von einer stromführenden Leitung, beispielsweise einem Elektrokabel oder einer Spule, mittels Induktion durch eine mit dem Lade-Adapter verbundene Induktionswicklung dem Lade-Adapter Strom und Spannung zugeführt wird. Die Induktionswicklung kann sich in einer aufklappbaren Induktions-Öse befinden, die aus dem Lade-Adapter vorsteht.

Der Lade-Adapter selbst kann fester, insbesondere integraler, Bestandteil der Verbraucherbaugruppe sein, die den eigentlichen Verbraucher, beispielsweise ein Leuchtmittel, enthält oder ein separates Bauteil sein. Letzteres hat den Vorteil, dass dadurch ein Kondensator mittels des Lade-Adapters geladen werden kann, der sich momentan nicht in der Verbraucherbaugruppe befindet und damit als Ersatz für den gerade im Einsatz befindlichen anderen Kondensator zur Verfügung steht.

Die Anwendung eines Kondensators als Spannungsquelle bei mobilen Verbrauchseinheiten hat je nach Anwendungsfall unterschiedliche spezifische Vorteile über die kurze Ladezeit hinaus:
Bei Taschenlampen als Verbrauchseinheit kann anstelle der bisher verwendeten Glühbirnen als Leuchtmittel nunmehr eine oder mehrere Leuchtdioden, insbesondere weiße Leuchtdioden, eingesetzt werden, deren Stromverbrauch drastisch niedriger ist, als derjenige von Glühbirnen und deshalb bei Betrieb mittels eines Kondensators als Spannungsquelle eine hohe Einsatzdauer von mehreren Stunden erwarten läßt. Zusätzlich legen die benötigten Spannungswerte einer Leuchtdiode die von einem Kondensator zur Verfügung gestellten Spannungen so zueinander, dass eine besonders einfache Versorgung einer Leuchtdiode mittels eines geladenen Kondensators möglich ist.

Um über die benötigte Lichtstärke indirekt die Leerungszeit des Kondensators steuern zu können, ist insbesondere der Einsatz von mehr als einer Leuchtdiode in einer solchen Taschenlampe sinnvoll, wobei ein Wählschalter die Einstellung ermöglicht, ob eine, zwei oder mehrere der vorhandenen Leuchtdioden gleichzeitig leuchten sollen je nach benötigter Lichtstärke.

Dabei sollten die einzelnen Kondensatorbaugruppen, die jeweils einen oder mehrere in Reihe geschaltete Kondensatoren enthalten, in der gewünschten Anzahl aneinander bzw. an der Verbraucherbaugruppe befestigbar sein, um unabhängig von dem gewünschten Einsatzzweck die benötigte Einsatzdauer durch entsprechende Anzahl solcher elektrisch z. B. parallel geschalteter, Kondensatorbaugruppen sicherstellen zu können.

Um zu vermeiden, dass wie bei einer Stabtaschenlampe das Gehäuse der Taschenlampe bereits die Anzahl der aufzunehmenden Batterien vorgibt, besteht bei der erfindungsgemäßen Taschenlampe diese vorzugsweise aus einer vorderen Verbraucherbaugruppe, die z. B. an der Frontseite die einen oder mehreren Leuchtmittel, insbesondere weiße Leuchtdioden, enthält und an deren Rückseite eine oder bei Bedarf auch mehrere Kondensatorbaugruppen hintereinander mechanisch fest angeordnet und dadurch auch elektrisch leitend miteinander verbunden werden können. Für die mechanische Verbindung stehen dabei die bekannten Verbindungsarten, insbesondere Verschraubung oder Bajonettverschluß, zur Verfügung. Der Außenumfang der Kondensatorbaugruppen bildet dann auch den Außenumfang des Schaftes der so entstehenden Stabtaschenlampe.

Da vorzugsweise auch die einzelnen Kondensatorbaugruppen sowohl an ihrer Frontseite als auch an der davon abgewandten Rückseite elektrische Kontakte aufweisen, wobei die rückwärtigen Kontakte dem Aufsetzen der nächsten Kondensatorbaugruppe dienen, hat die erfindungsgemäße Taschenlampe vorzugsweise einen Enddeckel zum Schutz und ggf. zur elektrischen Verbindung der rückwärtigen Kontakte der letzten Kondensatorbaugruppe.

Beim Ladeadapter können die primärseitigen Kontaktelemente aus dem Gehäuse des Lade-Adapters ausfahrbar, insbesondere herausklappbar oder auch fest angeordnet sein. In der Betriebsstellung, also zum Einstecken in eine entsprechende Steckdose, sollten die Kontaktelemente dabei vorzugsweise von der Längsrichtung des Lade-Adapters bzw. bei an dem Lade-Adapter angeschlossener Kondensatorbaugruppe von der Längsrichtung der Gesamtbaugruppe quer oder von der Kondensatorbaugruppe in Gegenrichtung wegweisend abstehen, um dadurch die Möglichkeit zu haben, dass bei einer in die Steckdose eingesteckten solchen Baugruppe die Baugruppe mit ihrer Längserstreckung vorzugsweise von der Steckdose aus herabhängt und die Kondensatorbaugruppe, ohne die Verbrauchereinheit abzunehmen, geladen werden kann.

Der Ladeadapter kann anstelle von Kontaktelementen mit fester Formgebung und Positionierung auch universelle Kontaktelemente, beispielsweise mittels biegsamer Arme am Gehäuse angeordnete Kontaktspitzen, aufweisen, die an jeden gewünschten elektrischen Kontakt jeder Form von Steckdose angesetzt werden können. Dies ist zwar unter Sicherheitsaspekten kritisch, vermeidet jedoch die Notwendigkeit, unterschiedliche Kontaktelemente anzuordnen und hilft damit, Gewicht zu sparen. Da die beweglichen, biegsamen Arme entsprechend der zur Verfügung stehenden Kontaktpunkte von Hand verformt werden müssen, müssen sie zur Vermeidung von Stromschlägen für den Benutzer bis auf die vorderste, freiliegende Kontaktspitze isoliert sein.

Eine andere Anwendungsform einer solchen Verbrauchseinheit ist ein Handy, welches aufgrund des deutlich höheren Stromverbrauchs im Vergleich zu einer mittels Leuchtdioden betriebene Taschenlampe mit heutigen Akkus eine geringe Betriebszeit hat.

Dem steht jedoch die schnelle Möglichkeit der Aufladung an jeder gewünschten Steckdose, egal ob im Fahrzeug oder in einem Gebäude, entgegen, die diesen Nachteil mehr als aufwiegt.

Zusätzlich könnten bei einem Handy, wenn der Lade-Adapter insbesondere in das Handy integriert ist, die primärseitigen Kontaktelemente, die beim Laden zur Verbindung mit einem Stromnetz dienen, oder wenigstens eines dieser vorstehenden Kontaktelemente im normalen Betriebszustand des Handys als Antenne benutzt werden oder zumindest zusammen mit der Antenne als ein gemeinsamer Fortsatz ausgebildet sein.

In gleicher Weise bzw. alternativ steht bei einer gewickelten Bauform des Kondensators auch die Kondensatorwicklung als Antenne zur Verfügung.

Der Kondensator selbst, der aus vielen, meist zylindrisch gewickelten, Schichten aufgebaut ist, könnte in geschichteter Form auch direkt in ein Gehäuseteil der Verbrauchseinheit und/oder der Kondensatoreinheit integriert werden, ohne deren Volumen zu vergrößern und/oder deren Stabilität zu verschlechtern.

Eine weitere Anwendung ist diejenige als Leseleuchte. In diesem Fall besteht die Möglichkeit, die Kondensatorbaugruppe in Form einer dünnen Platte oder Folie auszubilden und in das Buch zu legen bzw. als Buchseite mit in dem Buch einzubinden. Von dieser blattförmigen Kondensatorbaugruppe kann die Verbraucherbaugruppe in Form eines beweglichen Armes abstehen, an dessen vorderen Ende sich das Leuchtmittel, in der Regel wiederum eine weiße Leuchtdiode, befindet.

Ist die Verbrauchseinheit dagegen ein Herzschrittmacher, so eröffnet die Verwendung des Kondensators als Spannungsquelle die Möglichkeit, die Kontaktpunkte zum Laden des ebenfalls unter der Haut des Patienten implantierten Kondensators an einer beliebigen. Stelle unter der Haut des Patienten anzuordnen. Mittels Kontaktspitzen oder durch kontaktlose induktive Spitzen kann dann bei örtlicher Betäubung die Haut des Patienten kurzzeitig durchstossen und damit die Kontaktpunkte der Kondensatorbaugruppe kontaktiert und geladen werden, was wegen des nur geringen Zeitbedarfes von wenigen Sekunden machbar ist, bei längen Ladezeiten wie für Batterien jedoch unrealistisch wäre. Wegen des fehlenden Memory-Effektes kann dabei auch problemlos das vielhundertfache erneute Aufladen des Kondensators risikolos durchgeführt werden, während bei Verwendung von Akkus oder Batterien unter Sicherheitsaspekten heute noch ein Austausch bevorzugt wird.

Zusätzlich kann der Lade-Adapter auf seiner Außenfläche Solarzellen aufweisen, die bei starker Sonneneinstrahlung einen mit ihm verbundenen Kondensator ebenfalls laden.

Alternativ kann auch eine mechanische spannungserzeugende Einheit entweder in dem Lade-Adapter oder in der Verbraucherbaugruppe oder der Kondensatorbaugruppe angeordnet werden, die - ähnlich der aus anderen unbekannten Baugruppe - durch Bewegung, also Änderung der Position oder Drehlage - elektrischen Strom produziert.

Als Kondensatoren werden vorzugsweise sogenannte Gold-Kondensatoren, also mit Gold beschichtete Kondensatoren, verwendet, die derzeit eine Kapazität von mehr als 20 Farad (bis 50 F) besitzen und in Zukunft noch größere Kapazitäten bei einer Baugröße einer heutigen 9 V (einige cm³) Blockbatterie bieten.

Die Erfindung. betrifft auch.die Möglichkeit des Einsatzes von Kondensatorbaugruppen, die neben einem Kondensator als Spannungsquelle ein Gehäuse und die entsprechenden äußeren elektrischen Kontaktpunkte aufweisen, die hinsichtlich Formgebung und Dimensionierung den heute gebräuchlichen Batteriegrößen (Baby-, Mignon-, Mikro-Zellen etc) entsprechen und anstelle dieser Batterien in elektrische Verbraucher wie etwa Taschenlampen eingesetzt werden können. Zu diesem Zweck enthalten diese Kondensatorbaugruppen ggf. eine zusätzliche Schaltung, die bewirkt, dass die abgegebene Spannung immer der von einer analogen Batterie abgegebenen Spannung bzw. der vom Verbraucher benötigten Spannung entspricht.

Auführungsformen gemäß der Erfindung sind anhand der Figuren beispielhaft näher beschrieben. Es zeigen:
- Fig. 1:: schematisch den mechanischen und schaltungstechnischen Aufbau einer Taschenlampe mit einer Kondensatorspannungsquelle gemäß der Erfindung,
- Fig. 2:: schematisch den Aufbau einer alternativen Kondensatörspannungsquelle,
- Fig. 3:: schematisch den Aufbau eines Ladeadapters, und
- Fig. 4:: schematisch den Aufbau eines mit einer Kondensatorspannungsquelle betreibbaren Handys.

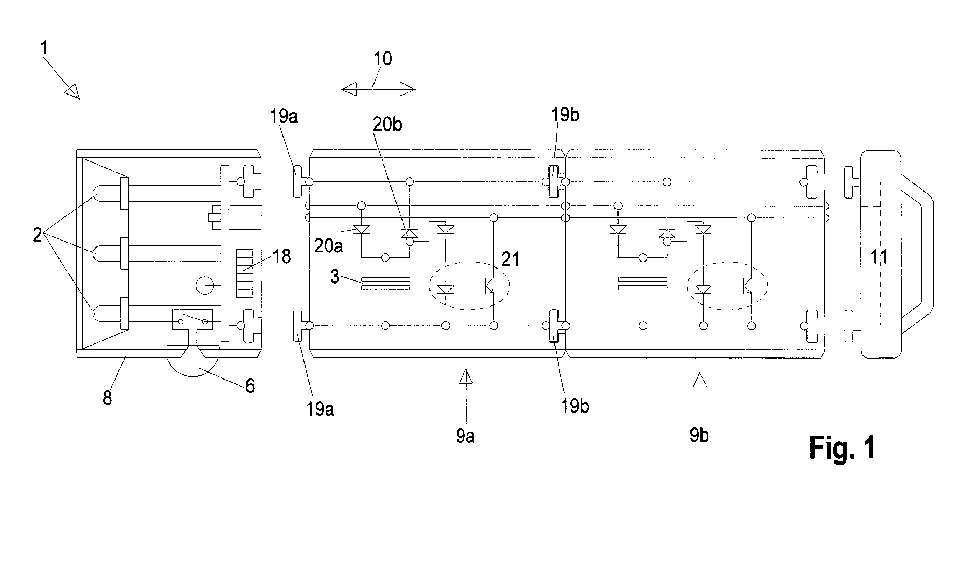

Fig. 1 zeigt eine Taschenlampe, die im wesentlichen zylindrisch aufgebaut ist, und am vorderen Ende eine Verbraucherbaugruppe 8 umfaßt, die Leuchtdioden 2 als Leuchtmittel enthält, und an der, in Längsrichtung 10 fortlaufend, als Energie- bzw. Spannungsquelle eine oder mehrere Kondensatorbaugruppen 9a, 9b, ... anordenbar ist, wobei auf die letzte Kondensatorbaugruppe 9b ein Abschlußdeckel 11 aufsetzbar ist.

Dabei wird durch Herstellen der mechanischen Verbindung, im vorliegenden Fall mittels Bajonettverschluß, zwischen den einzelnen Baugruppen und auch dem Enddeckel jeweils auch die gewünschte elektrische Verbindung über stirnseitig angeordnete Kontaktpunkte hergestellt.

Die Verbraucherbaugruppe 8 enthält die Leuchtdioden 2 sowie einen Wählschalter 6, mit dessen Hilfe die Anzahl der gleichzeitig betriebenen Leuchtdioden 2 und damit die Lichtstärke gewählt bzw. die Lampe 1 ganz abgeschaltet werden kann.

Vorzugsweise in dieser Verbraucherbaugruppe 8 oder in der Kondensatorbaugruppe 9 ist auch eine Ladezustandsanzeige 18 angeordnet, die den Ladezustand der an die Verbraucherbaugruppe 8 angeschlossenen Kondensatorbaugruppen 9a,b anzeigt. In Fig. 1 sind die einzelnen Baugruppen im noch nicht miteinander verbundenen Zustand dargestellt.

Die einzelnen Kondensatorbaugruppen 9a,b weisen jeweils an ihrer einen Stirnseite vorstehende Bajonettkontakte 19a auf, und an der gegenüberliegenden Stirnseite entsprechende Bajonettaufnahmen 19b.

Jede Kondensatorbaugruppe 9a,b weist einen im Inneren untergebrachten Kondensator 3 auf sowie jeweils eine gegensinnig geschaltete Schutzdioden 20a,b, die die Geschwindigkeit des Be- und Entladens begrenzen. Zusätzlich ist ein Optokoppler 21 mit dem Kondensator 3 verschaltet, um ein Signal hinsichtlich des momentanen Ladezustands des Kondensators 3 zu erzeugen.

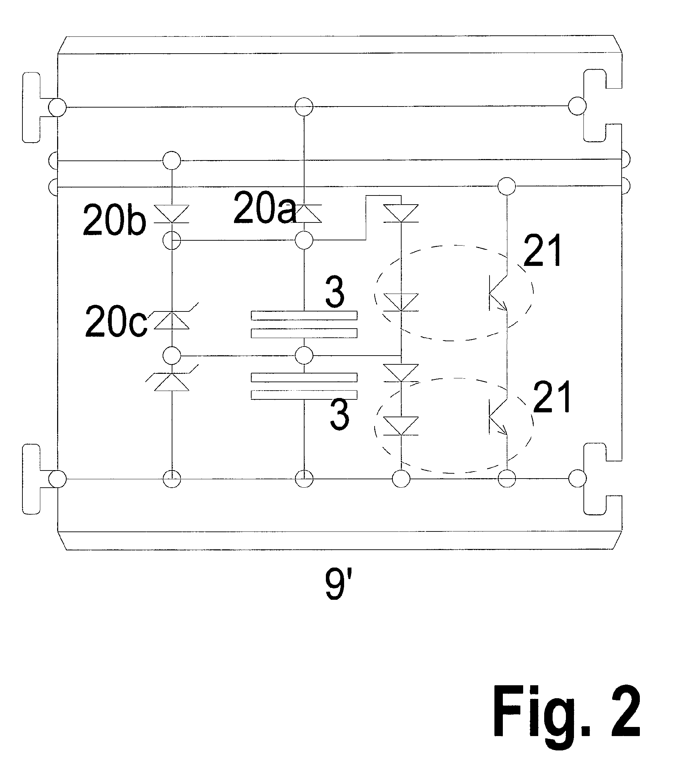

Fig. 2 zeigt eine alternative Bauform einer Kondensatorbaugruppe 9', innerhalb der zwei Kondensatoren, insbesondere Goldkondensatoren, in Reihe zueinander geschaltet sind. Ansonsten sind auch dort sowohl für die beiden in Reihe geschalteten Kondensatoren als Ganzes als auch für jeden einzelnen Kondensator Schutzdioden 20a,b,c,... vorhanden, und jedem Kondensator 3 ist ein separater Optokoppler 21 schaltungstechnisch zugeordnet.

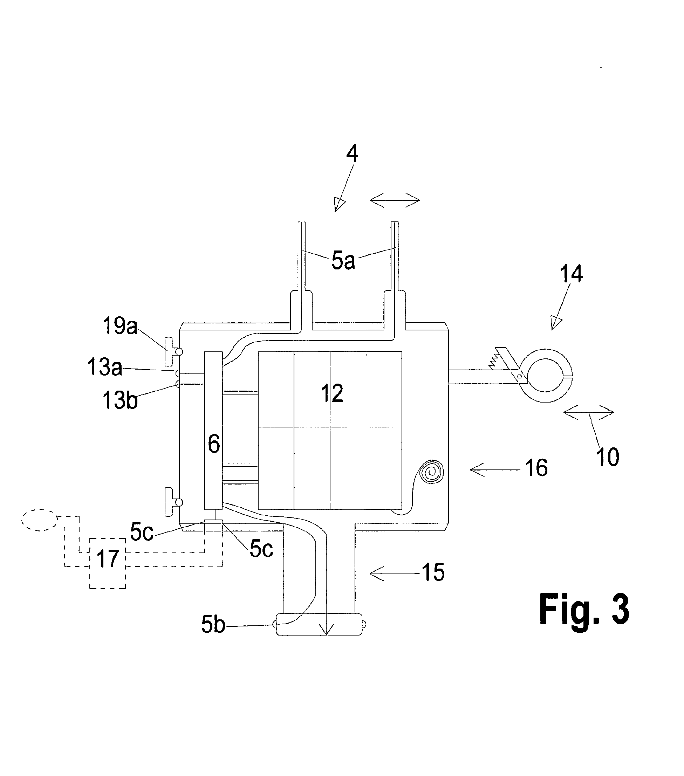

Fig. 3 zeigt einen Ladeadapter 4 mit mehreren primären Kontaktelementen 5a,b zum Verbinden mit verschiedenen Spannungsquellen und auf einer Stirnseite angeordneten, vorstehenden Bajonettkontakten 19a, um den Ladeadapter 4 auf der Rückseite einer Kondensatorbaugruppe 9 aufsetzen zu können, auch wenn diese mit einer Verbraucherbaugruppe 8 momentan verbunden ist.

Ebenso kann dieser Ladeadapter 4 - und damit eine mit ihm verbundene Energieversorgung - z. B. über diese Kontakte 19a direkt mit einer Verbraucherbaugruppe 8 verbunden sein, die dadurch auch direkt an einer festen Energieversorgung betrieben werden kann.

Die Kontaktelemente 5a als Steckkontakte für eine z. B. Schuko-Steckdose dienen der Verbindung mit einem 110 V oder 220 V-Festnetz. Diese Kontaktelemente 5a stehen vorzugsweise quer zur Längsrichtung 10 seitlich ab.

Vorzugsweise in die andere Querrichtung steht ein Fortsatz passend in einen Zigarettenanzünder eines Kfz zur Verbindung mit dessen 12 V-Bordnetz oder 24 V-Bordnetz ab.

An der anderen Stirnseite können weitere Kontaktelemente, beispielsweise eine unter der Oberfläche der Stirnseite angeordnete Induktionswicklung 16 zur kontaktlosen Verbindung mit einer Gegenspule angeordnet sein, oder auch eine aus dem Gehäuse des Ladeadapters 4 vorstehende, bewegliche Induktions-Öse 14.

Primäre Kontaktelemente 5c können weiterhin Steckkontakte zum Anschluß eines externen Spannungserzeugers, beispielsweise eines handbetriebenen Generators 17 oder eines externen Solarmoduls an beliebiger Stelle, außer an der noch verbleibenden ersten Stirnseite, sein. Vorzugsweise sind jedoch Solarzellen 12 direkt auf der Außenseite des Ladeadapters 4 angeordnet.

Zur Auswahl der primären Spannungsquelle kann ein Wählschalter 6' auf der Außenseite des Ladeadapters 4 angeordnet sein, sofern nicht eine integrierte Elektronik dies automatisch erkennt.

Vorzugsweise an einer Stirnseite des Ladeadapters 4 sind als sekundäre Kontaktelemente 13a die gleichen vorstehenden Bajonettkontakte 19a wie an den Kondensatorbaugruppen 9, 9' vorhanden und dienen der Verbindung mit diesen Kondensatorbaugruppen oder auch direkt mit der Verbrauchseinheit. Aus dem gleichen Grund weist der Ladeadapter 4 - quer zur Längsrichtung 10 betrachtet - vorzugsweise den gleichen Querschnitt wie die Kondensatorbaugruppen 9 auf.

Ein auf die letzte Kondensatorbaugruppe aufgesetzter Ladeadapter 4 ersetzt gleichzeitig die elektrische Funktion eines Enddeckels 11.

in schaltungstechnischer Hinsicht enthält der Ladeadapter 4 einerseits eine Ladekontrollelektronik 7, die den Ladezustand der Kondensatoren feststellt und während des Ladevorganges überwacht, sowie eine. Ladeelektronik, die die Geschwindigkeit der Ladung durch Regelung der Spannung, mit der die Kondensatoren beaufschlagt werden, regelt.

Die Kondensatorbaugruppen verfügen auch jeweils über ein Ventil, beispielsweise über eine einfache Öffnung auf vorzugsweise der Stirnseite, an der die Verbindung mit den anderen benachbarten Modulen geschieht, um beim Explodieren eines Kondensators keine Schäden für die Umwelt entstehen zu lassen.

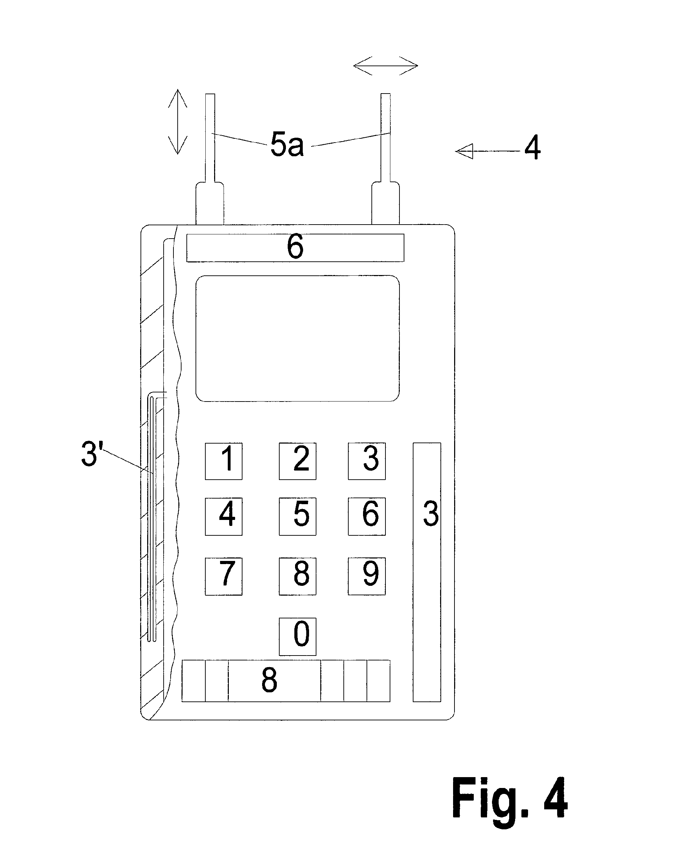

Fig. 4 zeigt ein Handy, dessen Energieversorgung mittels eines Kondensators 3 bzw. 3' erfolgt. Dabei stehen von der Oberseite des Gehäuses des Handys zwei primäre Kontaktelemente 5a ab, wie sie zum Einstecken der Schuko-Steckdose verwendet werden können, wobei einer der Primärkontakte gleichzeitig auch die Antenne enthält bzw. eine Antenne für das Handy darstellt. Vorzugsweise kann der Relativabstand der beiden Primärkontakte zueinander verstellt werden entsprechend dem jeweiligen Buchsenabstand von Steckdosen, was auch für einen separaten Ladeadapter 4 gemäß der Fig. 3 empfohlen wird.

Der Kondensator 3 bzw. 3' ist entweder im Inneren des Gehäuses des Handys, vorzugsweise in gefalteter, also geschichteter, Form innerhalb der Wandstärke des Gehäuses, untergebracht. An der außenseite des Gehäuses ist eine Ladezustands-Anzeige angeordnet.

### BEZUGSZEICHENLISTE

- 1: Lampe
- 2: Leuchtdiode
- 3: Kondensator
- 4: Ladeadapter
- 5a,b: primäre Kontaktelemente
- 5: Lade-Kontrollschaltung
- 6, 6': Wählschalter
- 7: Ladezustands-Kontrolleinrichtung
- 8: Verbraucherbaugruppe
- 9a,b,9': Kondensatorbaugruppe
- 10: Längsrichtung
- 11: Enddeckel
- 12: Solarzellen
- 13: sekundäre Kontaktelemente
- 14: Induktions-Öse
- 15: Zigarettenanzünder-Stecker
- 16: Induktionswicklung
- 17: handbetriebener Generator
- 18: Ladezustands-Anzeige
- 19a: Bajonett-Kontakte
- 19b: Bajonett-Aufnahmen
- 20a,b: Schutzdiode
- 21: Optokoppler

## Patentansprüche

1. Mobile elektrische Verbrauchseinheit, die während des Einsatzes von einer Strom-Erzeugung-Einheit getrennt ist und außer dem eigentlichen elektrischen Verbraucher eine mobile Spannungsquelle als Energie-Versorgung aufweist
**dadurchgekennzeichnet, dass**
die Spannungsquelle ein Kondensator (3) ist.

2. Verbrauchseinheit nach Anspruch 1,
**dadurch gekennzeichnet,dass**
der Verbraucher in einer Verbraucherbaugruppe (8) angeordnet ist, und insbesondere die Verbraucherbaugruppe (8), insbesondere als integralen Bestandteil, einen Lade-Adapter (4) umfasst, der unterschiedliche primäre Kontaktelemente (5a, b) zum Anschluss an unterschiedliche Strom-Erzeugungs-Einheiten, insbesondere Stromnetze, umfasst sowie wenigstens eine elektrische Lade-Kontroll-Schaltung (5), die unabhängig von der von der Strom-Erzeugungs-Einheit zur Verfügung gestellten Primärspannung beziehungsweise Primär-Stromstärke ausgangsseitig die gewünschte SekundärSpannung und Sekundär-Stromstärke zum Laden des Kondensators (3) zur Verfügung stellt.

3. Verbrauchseinheit nach einem der vorhergehenden Ansprüche
**dadurch gekennzeichnet,dass**
die mobile elektrische Verbrauchseinheit eine mobile Lampe (1), insbesondere eine Taschenlampe, ist.

4. Verbrauchseinheit nach einem der vorhergehenden Ansprüche
**dadurch gekennzeichnet, dass**
die Lampe (1) eine Leuchtdiode (2), insbesondere eine weiße Leuchtdiode, als Leuchtmittel aufweist, und insbesondere die Lampe (1) mehrere Leuchtdioden (2) umfasst, sowie einen Wählerschalter (6), um die Anzahl der gleichzeitig leuchtenden Leuchtdioden (2) einzustellen.

5. Verbrauchseinheit nach einem der vorhergehenden Ansprüche
**dadurch gekennzeichnet, dass**
die Verbrauchseinheit mehrere Kondensatoren (3) umfasst, die nach Bedarf elektrisch leitend und zu diesem Zweck mechanisch fest miteinander verbindbar, also insbesondere zusammensteckbar oder zusammenschraubbar, sind.

6. Verbrauchseinheit nach einem der vorhergehenden Ansprüche
**dadurch gekennzeichnet, dass**
die Verbraucher-Einheit eine Ladezustands-Kontroll-Einrichtung (7) umfasst, die wenigstens bei Unterschreiten eines minimalen Lade-Zustandes ein Warnsignal abgibt, insbesondere ständig den Lade-Zustand anzeigt, und insbesondere die Ladezustands-Kontröll-Einrichtung (7) Bestandteil der Verbraucherbaugruppe (8) ist und elektrische Kontaktelemente zur Verbindung mit dem Lade-Adapter, insbesondere dessen Lade-Kontroll-Schaltung (5), aufweist, und insbesondere die Ladezustands-Kontroll-Einrichtung (7) Bestandteil des Ladeadapters (4) ist.

7. Verbrauchseinheit nach einem der vorhergehenden Ansprüche
**dadurch gekennzeichnet, dass**
Der Ladeadapter (4) auf wenigstens einer seiner Außenseiten Solarzellen (12) aufweist.

8. Verbrauchseinheit nach einem der vorhergehenden Ansprüche
**dadurch gekennzeichnet,dass**
die sekundären Kontaktelemente (15a,b) des Ladeadapters (4) quer zur Längsrichtung (10) des Ladeadapters (4) abstehen, bei einem in die Verbraucherbaugruppe integrierten Ladeadapter quer zur Längsrichtung dieser Baugruppe abstehen, beziehungsweise in diese Position bringbar sind, und insbesondere die beiden primären Kontaktelemente (5a,b) des Ladeadapters (4) zum Einstecken in eine Schuko-Steckdose eines fest installierten Strom-Netzes in ihrem gegenseitigen Abstand einstellbar sind.

9. Verbrauchseinheit nach einem der vorhergehenden Ansprüche
**dadurch gekennzeichnet,dass**
Die Verbrauchseinheit ein mobiles, schnurloses Telefon (14) ist, wobei insbesondere der Lade-Adapter in das Telefon integriert ist und die vom Gehäuse des Telefons abstehenden primären Kontaktelemente (5a,b) des Ladeadapters zum Einstecken in eine Schuko-Steckdose wenigstens teilweise gleichzeitig als Antenne des Telefons dienen und/oder die Wicklung des Kondensator als Antenne dient.

10. Verbrauchseinheit nach einem der vorhergehenden Ansprüche
**dadurch gekennzeichnet, dass**
Die Kondensatoren der Kondensatorbaugruppe Goldkondensatoren mit einer Kapazität von mindestens 10, insbesondere mindestens 15, insbesondere mindestens 20, insbesondere mindestens 50 Farad sind.

11. Verbrauchseinheit nach einem der vorhergehenden Ansprüche
**dadurch gekennzeichnet, dass**
Die Verbrauchseinheit eine Buch-Leseleuchte ist und wenigstens die Kondensatorbaugruppe die Form eines Blattes, insbesondere einer Buchseite, hat, also insbesondere dünner als zwei Millimeter ist, und insbesondere in das Buch mit eingebunden ist.

12. Verbrauchseinheit nach einem der vorhergehenden Ansprüche
**dadurch gekennzeichnet,dass**
Die Verbrauchseinheit ein Ladegerät für konventionelle, wiederaufladbare Batterien (Akkus) ist und die Verbraucherbaugruppe Einsteck-Plätze für wenigstens einen solchen konventionellen Akku aufweist.

13. Verbrauchseinheit nach einem der vorhergehenden Ansprüche
**dadurch gekennzeichnet, dass**
Die Verbraucherbaugruppe und/oder die Kondensatorbaugruppe der Verbrauchseinheit eine mechanische Spannungs-Erzeugungseinheit umfasst, die insbesondere bereits durch Änderungen der Position und/oder Orientierung dieser Einheit Spannung erzeugt.

14. Verbrauchseinheit nach einem der vorhergehenden Ansprüche
**dadurch gekennzeichnet, dass**
Der Lade-Adapter ein primäres Kontaktelement zum Zwecke des Kontaktlosen, insbesondere induktiven, Aufladens des Kondensator das aus einer Strom führenden Einheit umfasst.
